# EUROPÄISCHE PATENTSCHRIFT

(11) **EP 3 599 387 B1**
(45) Veröffentlichungstag und Bekanntmachung des Hinweises auf die Patenterteilung: **11.11.2020**
(21) Anmeldenummer: 19185219.3
(22) Anmeldetag: 09.07.2019
(51) Int. Cl.: F16C 35/067

(54) **LADEEINRICHTUNG**
CHARGING DEVICE
DISPOSITIF DE CHARGEMENT

(30) Priorität: 27.07.2018 DE 102018212619
(43) Veröffentlichungstag der Anmeldung: 29.01.2020
(73) Patentinhaber: BMTS Technology GmbH & Co. KG, 70376 Stuttgart (DE)
(72) Erfinder: KISSLING, Konrad, 70197 Stuttgart (DE); KLEINSCHMIDT, Ruediger, 74354 Besigheim (DE); KUHNE, Oliver, 70374 Stuttgart (DE); SCHMITT, Steffen, 71254 Ditzingen (DE); STETTER, Frieder, 70597 Stuttgart (DE)
(74) Vertreter: BRP Renaud & Partner mbB Rechtsanwälte Patentanwälte Steuerberater

(56) Entgegenhaltungen:
- EP-A1- 3 284 964
- JP-A- 2007 023 858
- US-A1- 2012 107 112

## Beschreibung

Die vorliegende Erfindung betrifft eine Ladeeinrichtung, insbesondere einen Abgasturbolader, mit einem Lagergehäuse und einer darin angeordneten Lagerkartusche zur Lagerung einer Welle, gemäß dem Oberbegriff des Anspruchs 1. Die Erfindung betrifft außerdem ein Verfahren zur Montage einer Lagerkartusche in einer solchen Ladeeinrichtung.

Zur Befestigung einer Lagerkartusche in einem Lagergehäuse einer, insbesondere halbschwimmenden, Lagerung einer Welle, wird üblicherweise ein Sicherungsstift benötigt, der die Lagerkartusche gegen ein Verdrehen sowie eine axiale Bewegung sichert. Da die Positionierung der Lagerkartusche direkten Einfluss auf die minimal möglichen Konturspalte zwischen einem mit der Welle drehfest verbundenen Turbinenrad und einem Turbinengehäuse einer sich auf der einen Seite der Welle befindenden Turbine und zwischen einem ebenso drehfest mit der Welle verbundenen Verdichterrad und einem Verdichtergehäuse eines sich auf der entgegengesetzten Seite der Welle befindenden Verdichters hat, ist eine sehr genaue Positionierung der Lagerkartusche äußerst wichtig. Gleichzeitig dient die Öffnung, in die der Sicherungsstift eingebracht wird, in der Regel der Ölversorgung des Lagers. Darüber hinaus sollte die Montage des Lagerungsstiftes einfach sein, insbesondere sollte bei einem Positionieren des Sicherungsstiftes die Lagerkartusche nicht beschädigt werden.

Bei im Lagergehäuse verschraubten und von Öl um- oder durchströmten Sicherungsstiften, ergibt sich zudem häufig das Problem, dass das Gewinde mit dem Ölpfad in Verbindung steht, d.h. dass durch das Schneiden des Gewindes entstandene Späne unter Umständen in den Ölkreislauf gelangen können, was sich erheblich auf die Lebensdauer des Lagers auswirken kann.
Aus der US 8,449,199 B2 ist ein solcher in das Lagergehäuse eingeschraubter Sicherungsstift bekannt, der in einen konischen Sitz eingeschraubt wird und gleichzeitig eine fluidische Verbindung für das Öl zur Schmierung von Lagerstellen herstellt. Nachteilig hierbei ist, dass die konischen Dichtflächen des Stifts und des Sitzes im Lagergehäuse nur relativ aufwendig hergestellt werden können und dass durch das Schneiden des Gewindes entstandene Späne in den Ölkreislauf gelangen können, da das Gewinde mit dem Ölpfad in Verbindung steht.

Aus der EP 3 284 964 A1 ist eine gattungsgemäße Ladeeinrichtung mit einem Lagergehäuse und einer darin angeordneten Lagerkartusche zur Lagerung einer Welle und mit einem Sicherungsstift zur Sicherung der Lagerkartusche gegen ein Verdrehen und ein Verschieben in Axialrichtung bekannt, wobei der Sicherungsstift in montiertem Zustand in eine Öffnung an der Lagerkartusche eingreift.

Aus der US 2012/0107112 A1 und der JP 2007-023858 A sind weitere Ladeeinrichtungen bekannt.

Die vorliegende Erfindung beschäftigt sich daher mit dem Problem, für eine Ladeeinrichtung der gattungsgemäßen Art eine verbesserte oder zumindest eine alternative Ausführungsform anzugeben, die insbesondere die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einem über ein Gewinde in ein Lagergehäuse eingeschraubten Sicherungsstift zur Sicherung einer Lagerkartusche, die Gefahr, dass durch das Schneiden des Gewindes entstandene Späne unter Umständen in den Ölkreislauf gelangen und sich negativ auf die Lebensdauer des Lagers auswirken, dadurch zu reduzieren, dass das Gewinde gekapselt und so von einem Ölpfad abgeschnitten bzw. isoliert wird. Die erfindungsgemäße Ladeeinrichtung, die beispielsweise als Abgasturbolader ausgebildet sein kann, weist ein Lagergehäuse und eine darin angeordnete Lagerkartusche zur Lagerung einer Welle auf. Zur Sicherung dieser Lagerkartusche gegen ein Verdrehen und ein Verschieben in Axialrichtung ist der Sicherungsstift vorgesehen, der in montiertem Zustand in eine Öffnung an der Lagerkartusche eingreift. Erfindungsgemäß ist in dem Lagergehäuse eine Stiftaufnahme vorgesehen, mit einem ersten Abschnitt mit einem Innengewindeabschnitt und mit einem zweiten und dritten Abschnitt, wobei der dritte Abschnitt zwischen dem Innengewindeabschnitt und einer Lageröffnung des Lagergehäuses liegt und komplementär zum Schaftabschnitt des Sicherungsstiftes ausgebildet ist und als Positionieröffnung bzw. Zentrierbohrung dient. Der Sicherungsstift besitzt einen Kopf und einen Schaftabschnitt mit einem Außengewindeabschnitt. Der zweite Abschnitt der Stiftaufnahme weist einen größeren Durchmesser auf als der erste Abschnitt und geht über eine Radialstufe in den ersten Abschnitt über. Diese Radialstufe bildet in eingeschraubtem Zustand einen Axialanschlag für den Kopf des Sicherungsstiftes. Der Außengewindeabschnitt und der Innengewindeabschnitt bilden zusammen ein Gewinde, über das der Sicherungsstift in montiertem Zustand in der Stiftaufnahme verschraubt ist, wobei ein dichtes Aufliegen des Kopfes auf der Radialstufe einerseits und ein möglichst spielfreies Eingreifen des Schaftabschnitts in die Positionieröffnung anderseits die Kapselung des Gewindes bewirken. Der dritte Abschnitt weist somit kein Innengewinde auf. Das lagergehäuseseitige Innengewinde (Innengewindeabschnitt) ist somit nicht durchgängig ausgebildet, sondern in Richtung der Lagerkartusche durch den dritten Abschnitt begrenzt, wobei darauf zu achten ist, dass der Außengewindeabschnitt so gestaltet ist, dass der Kopf des Sicherungsstiftes auf der Radialstufe flächig aufliegt, und somit den Gewindeabschnitt gegenüber dem Ölpfad auf der der Lagerbuchse abgewandten Seite abdichtet. Der dritte Abschnitt kann vorzugsweise auch als Zentrierbohrung für den Sicherungsstift dienen, die eine besonders genaue Positionierung des Sicherungsstifts, und damit der Lagerkartusche (=> geringe Konturspalte am Turbinen- und Verdichterrad) erlaubt. Durch die erfindungsgemäß vorgesehene Kapselung des Gewindes kann ein ungewolltes Übertreten von beim Schneiden des Gewindes anfallenden Spänen in den Ölkreislauf/Ölpfad zuverlässig unterbunden und damit die Lebensdauer der Lagerkartusche bzw. der Ladeeinrichtung verlängert werden.

Erfindungsgemäß wird eine Fixierung der Lagerkartusche/Lagerbuchse für die Welle im Lagergehäuse der Ladeeinrichtung dadurch vereinfacht, dass diese über einen Sicherungsstift ausgerichtet und fixiert wird, der einen derart langen Schaftabschnitt aufweist, dass er zunächst in eine Öffnung der Lagerkartusche eingreift und diese ausrichtet, bevor er über sein Gewinde in dem Lagergehäuse verschraubt wird. Dies bietet den großen Vorteil, dass der Sicherungsstift zur Montage zunächst in die Stiftaufnahme eingeführt und ohne Aufbringen großer Kräfte mit seinem freien Ende des Schaftabschnitts durch den dritten Abschnitt mit der Positionieröffnung in die Öffnung der Lagerkartusche eingeführt werden kann und diese ausrichtet, bevor ein endgültiges Fixieren durch ein Verschrauben im ersten Abschnitt der Stiftaufnahme erfolgt. Insgesamt kann somit eine vergleichsweise einfache aber dennoch hochpräzise Fixierung der Lagerkartusche erreicht werden, ohne dass befürchtet werden muss, dass die Lagerkartusche beschädigt wird, da diese bereits ausgerichtet und positioniert ist, bevor der Sicherungsstift mit seinem Außengewindeabschnitt mit dem lagergehäuseseitigen Innengewindeabschnitt zusammenwirkt.

Entsprechend einer nicht erfindungsgemäßen Ausführungsform ist auch denkbar, dass die Länge des Schaftabschnitts des Sicherungsstifts so bemessen ist, dass dieser beim Montieren nicht in die Öffnung der Lagerkartusche eingreift und diese ausrichtet, bevor der Außengewindeabschnitt mit dem Innengewindeabschnitt zusammenwirkt. Somit wird der Sicherungsstift erst in die Stiftaufnahme eingeschraubt und greift dann erst in die Öffnung ein. Hierdurch kann der Sicherungsstift kürzer ausgeführt werden, was sich positiv auf die Kompaktheit des Gehäuses auswirkt. Durch eine entsprechend gestaltete Fase am unteren Ende des Stiftes lassen sich die Toleranzanforderungen an die Montage teilweise kompensieren.

Bei einer weiteren vorteilhaften Ausführungsform der erfindungsgemäßen Lösung weist der Sicherungsstift eine axiale Durchgangsöffnung auf, die insbesondere als Schmierölkanal ausgebildet ist. Hierdurch ist eine Schmierung der Lagerkartusche und Welle über den Sicherungsstift vergleichsweise einfach möglich. Zudem kann die axiale Durchgangsöffnung im Sicherungsstift zum Auffädeln desselben auf einen Führungsstift genutzt werden, über welchen der Sicherungsstift bei der Montage geführt ist.

Bei einer weiteren vorteilhaften Ausführungsform der erfindungsgemäßen Lösung weist die Lagerkartusche an einer der Öffnung gegenüberliegenden Seite eine Führungsstiftaufnahme auf. Über diese Führungsstiftaufnahme kann ein Führungsstift zum Führen des Sicherungsstifts eingesetzt werden, über welchen die Lagerkartusche ausgerichtet und wodurch die Montage des Sicherungsstiftes ebenfalls nochmals vereinfacht werden kann.

Bei einer vorteilhaften Weiterbildung der erfindungsgemäßen Lösung ist an zumindest einem Längsende der axialen Durchgangsöffnung eine Fase angeordnet. Hierdurch kann ein besseres Auffädeln auf einen Führungsstift zur Montage des Sicherungsstiftes in der Stiftaufnahme erreicht werden.

Die vorliegende Erfindung beruht weiter auf dem allgemeinen Gedanken, ein Verfahren zur Montage der Lagerkartusche in der zuvor beschriebenen Ladeeinrichtung anzugeben, bei welchem zunächst die Lagerkartusche vorausgerichtet in einer Lageröffnung des Lagergehäuses eingelegt wird. Anschließend wird ein Führungsstift in die Stiftaufnahme im Lagergehäuse und durch die Positionieröffnung und die Öffnung der Lagerkartusche bis in die zuvor beschriebene gegenüberliegende Führungsstiftaufnahme eingeschoben und dadurch die Lagerkartusche ausgerichtet. Anschließend wird der Sicherungsstift auf den Führungsstift aufgefädelt und soweit in die Stiftaufnahme im Lagergehäuse eingeführt, bis er in die Öffnung der Lagerkartusche eingreift. Anschließend wird der Sicherungsstift mit seinem Außengewindeabschnitt in den komplementär ausgebildeten Innengewindeabschnitt der Stiftaufnahme eingeschraubt, bis er mit seinem Kopf auf der Radialstufe aufliegt. Mit diesem Verfahren lässt sich der Sicherungsstift vergleichsweise einfach in das Lagergehäuse einsetzen und ein Ausrichten der Lagerkartusche erreichen, bevor der Sicherungsstift über die Verschraubung fixiert wird. Durch den Einsatz des Führungsstiftes kann sogar ein exaktes Ausrichten der Lagerkartusche noch vor dem eigentlichen Auffädeln des Sicherungsstiftes auf den Führungsstift erreicht werden. Durch den dritten Abschnitt und das Aufliegen des Kopfes auf der Radialstufe wird das Gewinde gekapselt, wodurch beim Gewindeschneiden entstandene Späne an einem Übertreten in den Ölpfad gehindert und dadurch die Lebensdauer der Lagerung erhöht werden können.

Alternativ ist auch denkbar, dass die Lagerkartusche zunächst vorausgerichtet in eine Lageröffnung des Lagergehäuses eingelegt und dann ein Zentrierdorn in die Stiftaufnahme im Lagergehäuse und in die Öffnung der Lagerkartusche eingeschoben und dadurch die Lagerkartusche ausgerichtet wird. Nach Entnahme des Zentrierdorns wird der Sicherungsstift soweit in die Stiftaufnahme eingeführt, bis er in die Öffnung der Lagerkartusche eingreift. Anschließend wird der Sicherungsstift eingeschraubt, bis er mit seinem Kopf auf der Radialstufe aufliegt. Der dritte Abschnitt dient dabei ebenfalls als Positionieröffnung und zugleich als Kapsel für das Gewinde von der Seite der Lagerkartusche her.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch
- Fig. 1a: eine Schnittdarstellung durch eine erfindungsgemäße Ladeeinrichtung im Bereich eines Sicherungsstifts,
- Fig. 1b: eine Darstellung wie in Fig. 1a, jedoch bei eingeschraubtem Sicherungsstift,
- Fig. 2a - c: einzelne Verfahrensschritte zur Montage des Sicherungsstifts mit Hilfe eines Führungsstifts.

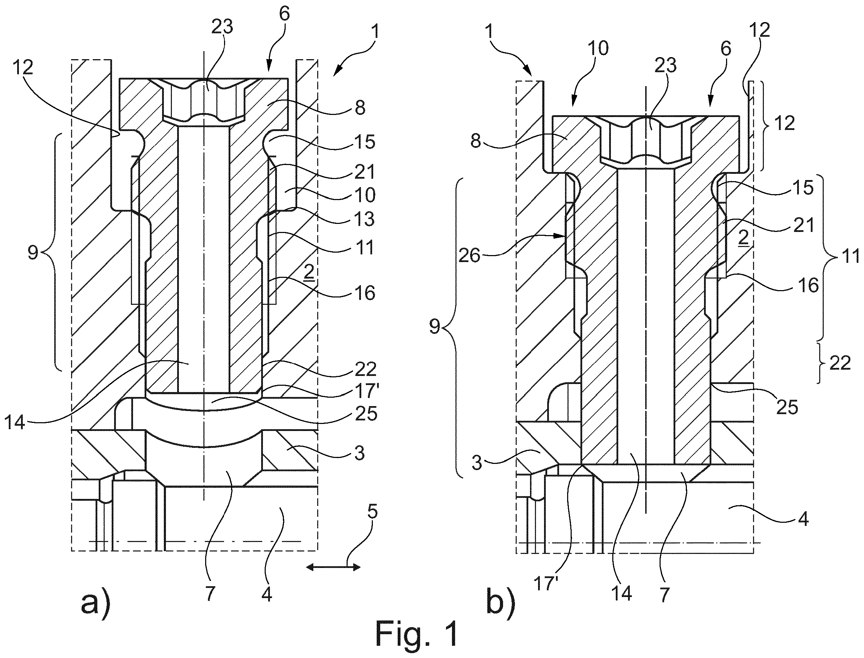

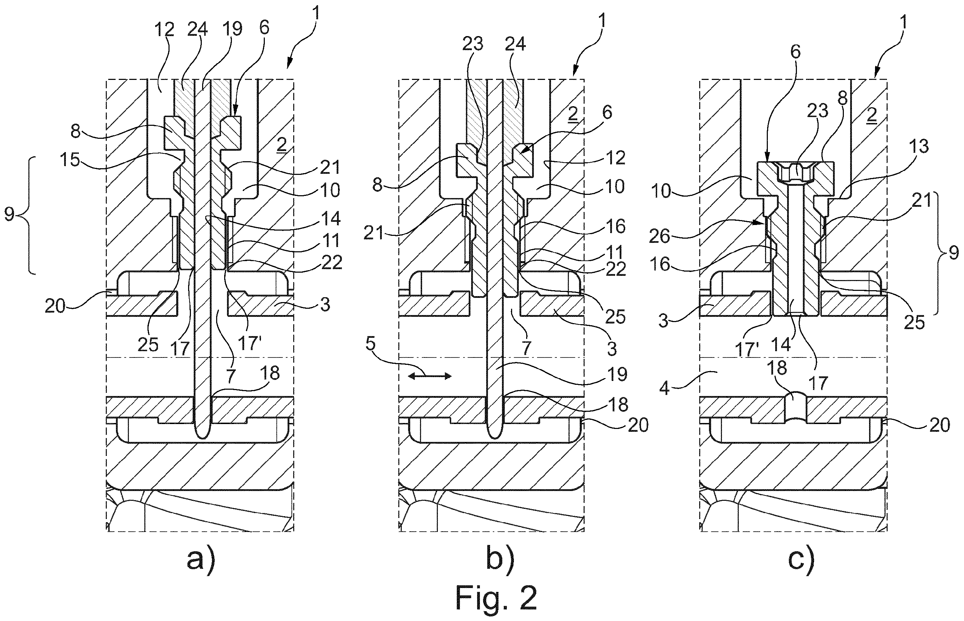

Entsprechend den Figuren 1 und 2, weist eine erfindungsgemäße Ladeeinrichtung 1, welche beispielsweise als Abgasturbolader ausgebildet sein kann, ein Lagergehäuse 2 sowie eine darin angeordnete Lagerkartusche 3 zur Lagerung einer Welle 4 auf. In Axialrichtung 5 sowie gegen ein Verdrehen, wird die Lagerkartusche 3 mittels eines Sicherungsstifts 6 gesichert, wobei der Sicherungsstift 6 im montierten Zustand in eine Öffnung 7 an der Lagerkartusche 3 eingreift. Der Sicherungsstift 6 selbst besitzt einen Kopf 8 und einen Schaftabschnitt 9, wobei in dem Lagergehäuse 2 eine Stiftaufnahme 10 vorgesehen ist, mit einem ersten Abschnitt 11, einem zweiten Abschnitt 12 und einem dritten Abschnitt 22. Der zweite Abschnitt 12 besitzt dabei einen größeren Durchmesser als der erste Abschnitt 11 und geht über eine Radialstufe 13 in den ersten Abschnitt 11 über. Diese Radialstufe 13 bildet bei montiertem Sicherungsstift 6 einen Axialanschlag für den Kopf 8 des Sicherungsstiftes 6, wobei in dieser Beziehung die Axialrichtung des Sicherungsstiftes 6 orthogonal zur Axialrichtung 5 ist.

In montiertem Zustand ist der Sicherungsstift 6 über eine Schraubverbindung in der Stiftaufnahme 10 fixiert. In dem ersten Abschnitt 11 sind hierzu ein Innengewindeabschnitt 16 und am Schaftabschnitt 9 ein komplementär dazu ausgebildeter Außengewindeabschnitt 21 vorgesehen, die zusammen die Verschraubung und ein Gewinde 26 bilden. Der dritte Abschnitt 22, der zwischen dem Innengewindeabschnitt 16 und einer Lageröffnung 20 des Lagergehäuses 2 liegt und komplementär zum Schaftabschnitt 9 des Sicherungsstiftes 6 ausgebildet ist, weist keinen Innengewindeabschnitt 16 auf und dient als Positionieröffnung 25. Komplementär soll dabei bedeuten, dass der Schaftabschnitt 9 vorzugsweise spielfrei durch den dritten Abschnitt 22 und die Positionieröffnung 25 gesteckt werden kann.

Der lagergehäuseseitige Innengewindeabschnitt 16 ist somit nicht durchgängig ausgebildet, sondern in Richtung der Lagerkartusche 3 durch den dritten Abschnitt 22 bzw. den vorzugsweise spielfrei in die Positionieröffnung 25 eingesteckten Schaftabschnitt 9 des Sicherungsstiftes 6 begrenzt. Dabei kann der dritte Abschnitt 22 vorzugsweise auch als Zentrierbohrung für den Sicherungsstift 6 dienen, die eine besonders genaue Positionierung des Sicherungsstifts 6, und damit der Lagerkartusche 3 (=> geringe Konturspalte am Turbinen- und Verdichterrad) erlaubt. Der Außengewindeabschnitt 21 und der Innengewindeabschnitt 16 bilden das zuvor erwähnte Gewinde 26, über das der Sicherungsstift 6 in montiertem Zustand in der Stiftaufnahme 10 verschraubt ist, wobei ein dichtes Aufliegen des Kopfes 8 auf der Radialstufe 13 und ein spielfreies Eingreifen des Schaftabschnitts 9 in die Positionieröffnung 25 eine Kapselung des Gewindes 26 bewirken. Hierdurch kann ein ungewolltes Eindringen von beim Schneiden des Innengewindeabschnitts 16 entstehenden Spänen in einen Ölpfad vermieden und damit die Lebensdauer der Lagerkartusche 3 bzw. der Ladeeinrichtung 1 verlängert werden.

Eine Länge des Schaftabschnitts 9 des Sicherungsstiftes 6 ist vorteilhafterweise so bemessen, dass dieser beim Montieren (vergleiche Figur 2b) zuerst in die Öffnung 7 der Lagerkartusche 3 eingreift und diese ausrichtet, bevor der Außengewindeabschnitt 21 mit dem Innengewindeabschnitt 16 zusammenwirkt und dadurch Kräfte auf den Sicherungsstift 6 ausgeübt werden. Hierdurch ist es möglich, den Sicherungsstift 6 ohne große Kräfte in die Öffnung 7 der Lagerkartusche 3 einzuführen, wodurch ein Ausrichten und Fixieren der Lagerkartusche 3 möglich ist, ohne dass dabei Beschädigungen befürchtet werden müssen. Alternativ ist selbstverständlich auch denkbar, dass die Länge des Schaftabschnitts 9 des Sicherungsstifts 6 so bemessen ist, dass dieser beim Montieren nicht in die Öffnung 7 der Lagerkartusche 3 eingreift und diese ausrichtet, bevor der Außengewindeabschnitt 21 mit dem Innengewindeabschnitt 16 zusammenwirkt. Somit wird der Sicherungsstift 6 erst in die Stiftaufnahme 10 eingeschraubt und greift dann erst in die Öffnung 7 ein (vgl. Fig. 1a).

Betrachtet man die Figuren 1 und 2 weiter, so kann man erkennen, dass der Sicherungsstift 6 eine axiale Durchgangsöffnung 14 aufweist, die nach der Montage als Schmierölkanal genutzt wird, um die Lagerung der Welle 4 ausreichend mit Schmierstoff, beispielsweise Öl, zu versorgen. An zumindest einem Längsende der axialen Durchgangsöffnung 14 kann eine Fase 17 angeordnet sein, die ein Auffädeln auf einen Führungsstift 19 (vgl. Fig. 1 und 2) erleichtert. Am Außendurchmesser des Schaftabschnittes 9 kann ebenfalls eine Fase 17' angeordnet sein. Durch diese kann das Ausrichten der Lagerkartusche 3 vereinfacht werden, was insbesondere wichtig ist, wenn der Sicherungsstift 6 einschraubt wird, bevor der Schaftabschnitt 9 in die Öffnung 7 der Lagerkartusche 3 eingreift.

Zwischen dem Kopf 8 und dem Schaftabschnitt 9 des Sicherungsstiftes 6 kann dabei ein Freistich 15 vorgesehen sein, welcher eine definierte Anlage der Unterkante des Kopfes 8 auf der Radialstufe 13 erlaubt und zudem unter Umständen auftretenden Schmutz aufnehmen kann, ohne dass dieser eine gewünschte Montageendlage des Sicherungsstiftes 6 beeinträchtigt. Derartige die Montage günstig beeinflussende Fasen können selbstverständlich auch an einem freien Ende des Schaftabschnitts 9 oder am Kopf 8 des Sicherungsstiftes 6 angeordnet sein. Am Kopf 8 des Sicherungsstiftes 6 kann zudem eine Werkzeugaufnahme 23 zur Aufnahme eines Drehwerkzeugs 24 (vgl. Fig. 3) angeordnet sein.

Betrachtet man die Ladeeinrichtung 1 gemäß den Figuren 2a bis 2c, so kann man erkennen, dass an der der Öffnung 7 gegenüberliegenden Seite der Lagerkartusche 3 eine Führungsstiftaufnahme 18 zur Aufnahme eines Führungsstifts 19 angeordnet ist. Über diesen Führungsstift 19 kann der Sicherungsstift 6 bei der Montage einfach geführt werden, indem er auf den Führungsstift 19 mit seiner Durchgangsöffnung 14 aufgefädelt wird.

Eine Montage der Lagerkartusche 3 in der Ladeeinrichtung 1 sowie ein Einbringen des Sicherungsstiftes 6 können dabei beispielsweise wie folgt erfolgen:
Zunächst wird die Lagerkartusche 3 vorausgerichtet in eine Lageröffnung 20 des Lagergehäuses 2 eingelegt bzw. eingeschoben. Anschließend wird der Führungsstift 19 entsprechend der Figur 2a so weit in die Stiftaufnahme 10 eingeführt, dass er sowohl durch die Öffnung 7 der Lagerkartusche 3 geführt ist, als auch durch die gegenüberliegende Führungsstiftaufnahme 18. Hierbei helfen kann die am Außendurchmesser des Schaftabschnittes 9 angeordnete Fase 17'. Hierdurch ist eine eindeutige und exakt vordefinierte Ausrichtung und Fixierung der Lagerkartusche 3 relativ zum Lagergehäuse 2 der Ladeeinrichtung 1 möglich. Anschließend wird der Sicherungsstift 6 auf den Führungsstift 19 aufgefädelt und so weit eingeführt, bis er in die Öffnung 7 der Lagerkartusche 3 eingreift. Durch ein anschließendes Einschrauben des Außengewindeabschnitts 21 in den komplementär dazu ausgebildeten Innengewindeabschnitt 16 wird nun die Schraubverbindung zwischen dem Sicherungsstift 6 und der Stiftaufnahme 10 hergestellt und dadurch der Sicherungsstift 6 in der Stiftaufnahme 10 fixiert. Die Montageendstellung erreicht der Sicherungsstift 6, sofern er mit seinem Kopf 8 auf der Radialstufe 13 aufliegt. Dann ist das Gewinde 26 nach außen abgeschlossen und somit gekapselt.

Selbstverständlich kann ein Ausrichten der Lagerkartusche 3 relativ zum Lagergehäuse 2 der Ladeeinrichtung 1 auch durch ein Einführen eines hinsichtlich seines Durchmessers deutlich dickeren Führungsstiftes 19 bzw. Zentrierdorns erfolgen, der dann in die Öffnung 7 der Lagerkartusche 3 eingreift aber nicht in die Führungsstiftaufnahme 18 der Lagerkartusche 3. In diesem Fall ist ein maximaler Durchmesser des Führungsstiftes 19 bzw. Zentrierdorns im Bereich der Öffnung 7 geringfügig kleiner ist als ein Durchmesser der Öffnung 7 der Lagerkartusche 3. Eine Zentrierung der Lagerkartusche 3 über die Öffnung 7 der Lagerkartusche 3 bietet den wesentlichen Vorteil, dass es bei der Montage nicht zu einer Verspannung zwischen Sicherungsstift 6, Lagerkartusche 3 und Führungsstift 19 bzw. Zentrierdorn aufgrund einer herstellungsbedingten Fehlausrichtung der Führungsstiftaufnahme 18 gegenüber der Öffnung 7 kommen kann. In dieser Variante erfolgen Ausrichtung mittels Führungsstift 19 bzw. Zentrierdorn und Fixierung mittels Sicherungsstift 6 ebenfalls durch die Stiftaufnahme 10.

Unabhängig vom angewandten Montageverfahren handelt es sich generell um eine einseitige Montage, die montage- und bauraumtechnisch von Vorteil ist, da man nur einen Zugang von einer Seite benötigt, was bei den immer kompakter werdenden Gehäusen einen großen Vorteil darstellt.

Mit der erfindungsgemäßen Ladeeinrichtung 1 und mit dem erfindungsgemäßen Verfahren lässt sich die Lagerkartusche 3 vergleichsweise einfach im Lagergehäuse 2 der Ladeeinrichtung 1 montieren, wobei zusätzlich folgende Vorteile gegeben sind:
- Verlängerung der Lebensdauer der Lagerkartusche 3 bzw. der Ladeeinrichtung 1 durch das gekapselte Gewinde 26, das ein ungewolltes Eindringen von beim Schneiden des Innengewindeabschnitts 16 entstehenden Spänen in einen Ölpfad unterbindet,
- einfaches Ausrichten der Lagerkartusche 3 durch den Führungsstift 19 bzw. den Sicherungsstift 6 vor dem Aufbringen großer Kräfte und damit ein Verhindern von Beschädigungen,
- zuverlässiges Fixieren des Sicherungsstiftes 6 durch die Schraubverbindung,
- einseitige Montagemöglichkeit, die einen Zugang nur von einer Seite benötigt.

## Patentansprüche

1. Ladeeinrichtung (1), insbesondere ein Abgasturbolader,
- mit einem Lagergehäuse (2) und einer darin angeordneten Lagerkartusche (3) zur Lagerung einer Welle (4),
- mit einem Sicherungsstift (6) zur Sicherung der Lagerkartusche (3) gegen ein Verdrehen und ein Verschieben in Axialrichtung (5), wobei der Sicherungsstift (6) in montiertem Zustand in eine Öffnung (7) an der Lagerkartusche (3) eingreift,
- wobei der Sicherungsstift (6) einen Kopf (8) und einen Schaftabschnitt (9) mit einem Außengewindeabschnitt (21) aufweist,
- wobei in dem Lagergehäuse (2) eine Stiftaufnahme (10) vorgesehen ist, mit einem ersten Abschnitt (11) mit einem Innengewindeabschnitt (16) und mit einem zweiten Abschnitt (12) und einem dritten Abschnitt (22), wobei der dritte Abschnitt (22) zwischen dem Innengewindeabschnitt (16) und einer Lageröffnung (20) des Lagergehäuses (2) liegt und komplementär zum Schaftabschnitt (9) des Sicherungsstiftes (6) ausgebildet ist und als Positionieröffnung (25) dient,
- wobei der zweite Abschnitt (12) einen größeren Durchmesser aufweist als der erste Abschnitt (11) und über eine Radialstufe (13) in den ersten Abschnitt (11) übergeht,
- wobei die Radialstufe (13) einen Axialanschlag für den Kopf (8) des Sicherungsstiftes (6) bildet,
- wobei der Außengewindeabschnitt (21) und der Innengewindeabschnitt (16) ein Gewinde (26) bilden, über das der Sicherungsstift (6) in montiertem Zustand in der Stiftaufnahme (10) verschraubt ist, wobei ein dichtes Aufliegen des Kopfes (8) auf der Radialstufe (13) und ein vorzugsweise spielfreies Eingreifen des Schaftabschnitts (9) in die Positionieröffnung (25) eine Kapselung des Gewindes (26) bewirken,
**dadurch gekennzeichnet,**
**dass** eine Länge des Schaftabschnitts (9) des Sicherungsstifts (6) so bemessen ist, dass dieser beim Montieren zuerst in die Öffnung (7) der Lagerkartusche (3) eingreift und diese ausrichtet, bevor der Außengewindeabschnitt (21) mit dem Innengewindeabschnitt (16) zusammenwirkt,

2. Ladeeinrichtung nach Anspruch 1,
**dadurch gekennzeichnet,**
**dass** der Sicherungsstift (6) eine axiale Durchgangsöffnung (14) aufweist.

3. Ladeeinrichtung nach Anspruch 2,
**dadurch gekennzeichnet,**
**dass** die axiale Durchgangsöffnung (14) als Schmierölkanal ausgebildet ist.

4. Ladeeinrichtung nach Anspruch 3,
**dadurch gekennzeichnet,**
- **dass** an zumindest einem Längsende der axialen Durchgangsöffnung (14) eine Fase (17) angeordnet ist, und/oder
- **dass** am Außendurchmesser des Schaftabschnittes (9) eine Fase (17') angeordnet ist.

5. Ladeeinrichtung nach einem der vorhergehenden Ansprüche,
**dadurch gekennzeichnet,**
**dass** zwischen dem Kopf (8) und dem Außengewindeabschnitt (21) des Sicherungsstiftes (6) ein Freistich (15) vorgesehen ist.

6. Ladeeinrichtung nach einem der vorangehenden Ansprüche,
**dadurch gekennzeichnet,**
**dass** die Lagerkartusche (3) an einer der Öffnung (7) gegenüberliegenden Seite eine Führungsstiftaufnahme (18) aufweist.

7. Verfahren zur Montage einer Lagerkartusche (3) in einer Ladeeinrichtung (1) nach Anspruch 6,
**dadurch gekennzeichnet,**
- **dass** die Lagerkartusche (3) vorausgerichtet in eine Lageröffnung (20) des Lagergehäuses (2) eingelegt wird,
- **dass** ein Führungsstift (19) in die Stiftaufnahme (10) im Lagergehäuse (2) und durch die Öffnung (7) der Lagerkartusche (3) bis in die Führungsstiftaufnahme (18) eingeschoben und dadurch die Lagerkartusche (3) ausgerichtet wird,
- **dass** der Sicherungsstift (6) auf den Führungsstift (19) aufgefädelt und soweit in die Stiftaufnahme (10) eingeführt wird, bis er in die Öffnung (7) der Lagerkartusche (3) eingreift,
- **dass** der Sicherungsstift (10) anschließend eingeschraubt wird, bis er mit seinem Kopf (8) auf der Radialstufe (13) aufliegt.

8. Verfahren zur Montage einer Lagerkartusche (3) in einer Ladeeinrichtung (1) nach einem der Ansprüche 1 bis 6,
**dadurch gekennzeichnet,**
- **dass** die Lagerkartusche (3) vorausgerichtet in eine Lageröffnung (20) des Lagergehäuses (2) eingelegt wird,
- **dass** ein Zentrierdorn in die Stiftaufnahme (10) im Lagergehäuse (2) und in die Öffnung (7) der Lagerkartusche (3) eingeschoben und dadurch die Lagerkartusche (3) ausgerichtet wird,
- **dass** der Zentrierdorn entfernt wird,
- **dass** der Sicherungsstift (6) soweit in die Stiftaufnahme (10) eingeführt wird, bis er in die Öffnung (7) der Lagerkartusche (3) eingreift,
- **dass** der Sicherungsstift (10) anschließend eingeschraubt wird, bis er mit seinem Kopf (8) auf der Radialstufe (13) aufliegt.

## Claims

1. Charging device (1) in particular an exhaust-gas turbocharger,
having a bearing house (2) and a bearing cartridge (3) arranged therein for bearing a shaft (4),
- having a securing pin (6) for securing the bearing cartridge (3) against rotation and displacement in the axial direction (5), wherein, in the installed state, the securing pin (6) engages in an opening (7) on the bearing cartridge (3),
- wherein the securing pin (6) has a head (8) and a shaft section (9) comprising an externally threaded section (21),
- wherein a pin receptacle (10) is provided in the bearing housing (2), having a first section (11) comprising an internally threaded section (16) and having a second section (12) and a third section (22), wherein the third section (22) lies between the internally threaded section (16) and a bearing opening (20) of the bearing housing (2) and is designed to be complementary to the shaft section (9) of the securing pin (6) and serves as a positioning opening (25),
- wherein the second section (12) has a larger diameter than the first section (11) and merges into the first section (11) via a radial step (13),
- wherein the radial step (13) forms an axial stop for the head (8) of the securing pin (6),
- wherein the externally threaded section (21) and the internally threaded section (16) form a thread (26), via which, in the installed state, the securing pin (6) is screwed in the pin receptacle (10), wherein a tight abutment of the head (8) on the radial step (13) and a preferably play-free engagement of the shaft section (9) in the positioning opening (25) bring about an enclosure of the thread (26),
**characterised in that**
a length of the shaft section (9) of the securing pin (6) is dimensioned so that, during installation, it first engages in and aligns the opening (7) of the bearing cartridge (3), before the externally threaded section (21) interacts with the internally threaded section (16).

2. Charging device according to claim 1, **characterised in that** the securing pin (6) has an axial through-opening (14).

3. Charging device according to claim 2, **characterised in that** the axial through-opening (14) is designed as a lubricating oil channel.

4. Charging device according to claim 3, **characterised in that**
- a bevel (17) is arranged on at least one longitudinal end of the axial through-opening (14), and/or
- a bevel (17') is arranged on the outer diameter of the shaft section (9).

5. Charging device according to any of the preceding claims, **characterised in that** an undercut (15) is arranged between the head (8) and the externally threaded section (21) of the securing pin (6).

6. Charging device according to any one of the preceding claims, **characterised in that** the bearing cartridge (3) has a guide pin receptacle (18) on a side opposite the opening (7).

7. Method for installing a bearing cartridge (3) in a charging device (1) according to claim 6, **characterised in that**,
- the bearing cartridge (3) is inserted pre-aligned into a bearing opening (20) of the bearing housing (2),
- a guide pin (19) is pushed into the pin receptacle (10) in the bearing housing (2) and through the opening (7) of the bearing cartridge (3) into the guide pin receptacle (18) and as a result the bearing cartridge (3) is aligned,
- the securing pin (6) is threaded on to the guide pin (19) and inserted into the pin receptacle (10) until it engages in the opening (7) of the bearing cartridge (3),
- the securing pin (10) is then screwed in until it abuts with its head (8) on the radial step (13).

8. Method for installing a bearing cartridge (3) in a charging device (1) according to any of claims 1 to 6, **characterised in that**,
- the bearing cartridge (3) is inserted pre-aligned into a bearing opening (20) of the bearing housing (2),
- a centring pin is pushed into the pin receptacle (10) in the bearing housing (2) and into the opening (7) of the bearing cartridge (3) and as a result the bearing cartridge (3) is aligned,
- the centring pin is removed,
- the securing pin (6) is inserted into the pin receptacle (10) until it engages in the opening (7) of the bearing cartridge (3),
- the securing pin (10) is then screwed in until it abuts with its head (8) on the radial step (13).

## Revendications

1. Dispositif de chargement (1), en particulier turbocompresseur à gaz d'échappement,
- avec un boîtier de palier (2) et une cartouche de palier (3) agencée dedans pour le logement d'un arbre (4),
- avec une goupille de sécurité (6) pour la fixation de la cartouche de palier (3) contre une rotation et un déplacement dans le sens axial (5), dans lequel la goupille de sécurité (6) vient en prise dans l'état monté dans une ouverture (7) au niveau de la cartouche de palier (3),
- dans lequel la goupille de sécurité (6) présente une tête (8) et une section de tige (9) avec une section de filet extérieur (21),
- dans lequel dans le boîtier de palier (2) un logement de tige (10) est prévu, avec une première section (11) avec une section de filet intérieur (16) et avec une deuxième section (12) et une troisième section (22), dans lequel la troisième section (22) se trouve entre la section de filet intérieur (16) et une ouverture de palier (20) du boîtier de palier (2) et est réalisée de manière complémentaire à la section de tige (9) de la goupille de sécurité (6) et sert d'ouverture de positionnement (25),
- dans lequel la deuxième section (12) présente un plus grand diamètre que la première section (11) et passe par un étage radial (13) dans la première section (11),
- dans lequel l'étage radial (13) forme une butée axiale pour la tête (8) de la goupille de sécurité (6),
- dans lequel la section de filet extérieur (21) et la section de filet intérieur (16) forment un filet (26) par lequel la goupille de sécurité (6) est vissée dans l'état monté dans le logement de tige (10), dans lequel un placement étanche de la tête (8) sur l'étage radial (13) et une mise en prise de préférence sans jeu de la section de tige (9) dans l'ouverture de positionnement (25) provoquent un capsulage du filet (26),
**caractérisé en ce**
**qu'**une longueur de la section de tige (9) de la goupille de sécurité (6) est dimensionnée de sorte que celle-ci vienne en prise lors du montage tout d'abord dans l'ouverture (7) de la cartouche de palier (3) et oriente celle-ci avant que la section de filet extérieur (21) ne coagisse avec la section de filet intérieur (16).

2. Dispositif de chargement selon la revendication 1,
**caractérisé en ce**
**que** la goupille de sécurité (6) présente une ouverture débouchante (14) axiale.

3. Dispositif de chargement selon la revendication 2,
**caractérisé en ce**
**que** l'ouverture débouchante axiale (14) est réalisée comme canal d'huile lubrifiante.

4. Dispositif de chargement selon la revendication 3,
**caractérisé en ce**
- **qu'**au niveau d'au moins une extrémité longitudinale de l'ouverture débouchante (14) axiale un chanfrein (17) est agencé, et/ou
- **qu'**au niveau du diamètre extérieur de la section de tige (9) un chanfrein (17') est agencé.

5. Dispositif de chargement selon l'une des revendications précédentes,
**caractérisé en ce**
**qu'**une rainure de dégagement (15) est prévue entre la tête (8) et la section de filet extérieur (21) de la goupille de sécurité (6).

6. Dispositif de chargement selon l'une des revendications précédentes,
**caractérisé en ce**
**que** la cartouche de palier (3) présente au niveau d'un côté opposé à l'ouverture (7) un logement de tige de guidage (18).

7. Procédé de montage d'une cartouche de palier (3) dans un dispositif de chargement (1) selon la revendication 6,
**caractérisé en ce**
- **que** la cartouche de palier (3) est insérée de manière préorientée dans une ouverture de palier (20) du boîtier de palier (2),
- **qu'**une tige de guidage (19) est enfoncée dans le logement de tige (10) dans le boîtier de palier (2) et par l'ouverture (7) de la cartouche de palier (3) jusque dans le logement de tige de guidage (18) et ainsi la cartouche de palier (3) est orientée,
- **que** la goupille de sécurité (6) est enfilée sur la tige de guidage (19) et est introduite dans le logement de tige (10) jusqu'à ce qu'elle vienne en prise dans l'ouverture (7) de la cartouche de palier (3),
- **que** la goupille de sécurité (10) est ensuite vissée jusqu'à ce qu'elle repose avec sa tête (8) sur l'étage radial (13).

8. Procédé de montage d'une cartouche de palier (3) dans un dispositif de chargement (1) selon l'une des revendications 1 à 6,
**caractérisé en ce**
- **que** la cartouche de palier (3) est insérée de manière préorientée dans une ouverture de palier (20) du boîtier de palier (2),
- **qu'**une broche de centrage est enfoncée dans le logement de tige (10) dans le boîtier de palier (2) et dans l'ouverture (7) de la cartouche de palier (3) et ainsi la cartouche de palier (3) est orientée,
- **que** la broche de centrage est retirée,
- **que** la goupille de sécurité (6) est introduite dans le logement de tige (10) jusqu'à ce qu'elle vienne en prise dans l'ouverture (7) de la cartouche de palier (3),
- **que** la goupille de sécurité (10) est ensuite vissée jusqu'à ce qu'elle repose avec sa tête (8) sur l'étage radial (13).
